# EUROPEAN PATENT APPLICATION

(11) **EP 0 545 846 A1**
(43) Date of publication of application: **09.06.1993**
(21) Application number: 92610084.3
(22) Date of filing: 26.11.1992
(51) Int. Cl.: F16K 1/44, B67C 3/22

(54) **Double-seat valves**

(30) Priority: 29.11.1991 DK 1943/91
(71) Applicant: Jeppsson, Hakan, DK-9530 Stoevring (DK)
(72) Inventor: Jeppsson, Hakan, DK-9530 Stoevring (DK)
(74) Representative: Skoett-Jensen, Knud

(57) **Abstract**

In a valve of the double-seat type, where a drainage chamber (52) is provided between two valve members (20,22) closing against a common, conical valve seat passage (12), the actuator unit (18) for lifting the valve members is designed so as to automatically increase the closing pressure on the wider valve member (22) when the narrower valve member (20) is caused to be lifted individually. Hereby the drainage chamber may be CIP cleaned by CIP liquid entering from the valve chamber (8,10), without any risk of the CIP liquid forcing its way into the valve chamber (6) associated with the wider valve member (22). Further details such as stuffing boxes for valve rods of the respective valve members may hereby also be cleaned, without any provision of external supply piping for CIP liquid.

## Description

The present invention relates to a valve unit having two adjacent valve chambers adapted for connection with respective pipe systems e.g. a processing plant, and a valve passage arranged between these valve chambers, said passage forming a valve seat opening, which is normally closed by a valve head that is retractable from the valve set by means of an exterior valve actuator system. Thus, the valve can be opened for interconnecting the two pipe systems. These valves are widely used in many industries, also in the foodstuff sector, where it is particularly important that the pipe systems can be effectively separated, e.g. when one system is in operation while the other system is operative with another fluid or is being cleaned by means of a CIP cleaning liquid.

There are particular problems connected with this valve operation, because it has to be made sure that no leaks can occur through the closed valve seat and that the valve head and its associated seat and moving means can be effectively cleaned. For meeting with these requirements the so-called double-seat valves or double-block and bleed valves have been developed, wherein the valve head consists of two parallel valve members both closing against a conical valve seat and forming between them a drainage chamber, which, e.g. through a channel in a valve head rod, is connected to a drain outlet. Should liquid leak through the seal of one valve member this will be easily detectable at the drain outlet, and the liquid will not be liable to leak further through the packing of the opposite valve member as well. Thus, the valve can be repaired before any operative leak could occur. As far as the cleaning is concerned these valves will allow for a selective CIP-cleaning of both of the active seating areas of the two valve members, because these members may be individually liftable from the conical valve seat, thus providing for access for CIP liquid from any of the two pipe systems into the drainage chamber, i.e. right across the seating area of the respective valve member, while the other valve member may remain closed. Hereby even the drainage chamber and its outlet channel will be cleaned, what is also important.

If or when the "upper" or wider valve member is lifted from its conical seat, the pressure of the CIP-liquid as now entering the drainage chamber from the associated pipe system or valve chamber will act on the opposite, narrower valve member so as to force this valve member into a firm sealing contact with the narrow end of the conical seat, while a separate lifting of the narrower valve member will have the opposite effect, viz. that the pressure of the CIP liquid in the other valve chamber will act upon the wider valve member in a direction away from its sealing contact with the conical valve seat, thus weakening the required sealing at this place. The very possibility of a required sealing being weakened should ring the alarm bells, when this requirement is really important, but in most of the conventional valves this problem really exists. The valves are produced in large series, and the production costs should be held low, whereby this "minor problem" is normally neglected, though with disastrous consequences now and then.

The problem, in fact, has already been recognized, according to the disclosure of US-A-4,483,360. However, the associated solution of the problem is very expensive, involving special cam actuator means to be built together with the traditional pneumatically operated actuation system that is merely based on air operated pistons.

It is the purpose of the present invention to provide a valve of the type referred to, which is producible at relatively low costs and yet is designed such that the wider valve member will safely resist the opening pressure of the CIP liquid.

According to the invention this is achievable by a rather simple modification of already known pneumatic piston based actuators, In these actuators it is required or at least conventional that the narrower valve plate has an associated first piston which is spring biased towards the closed position of the valve plate, while the broader valve plate is connected with a second piston, which is spring biased relative to the first piston so as to normally, in both the closed and the open position of the entire valve head, seek to hold the two valve plates together. The valve will then be openable by applying air pressure to the non-biased side of the said first piston, as this will provoke a displacement of both pistons, with the two piston plates held firmly together.

When it is desired to separately lift the wider valve plate for cleaning it by the CIP-liquid in the associated pipe system, while the narrower valve plate is still effectively closing the valve passage, it will of course be sufficient to apply an air pressure to the non-biased side of the second piston, as proposed in DE-C-30 05 329, while maintaining the closing spring bias on the first piston. The lifting of the wider valve plate induces a certain lifting action on the moving system of the narrower valve plate member, but this influence is counteracted by the pressure of the CIP liquid as entering the opened space between the two valve plates, and thus forcing the narrow valve member against its conical valve seat.

Correspondingly, when it is desired to effect a separate lifting of the narrow valve plate, it should be sufficient to supply an air pressure to the non-biased side of the said first piston, but as already mentioned this will or may result in a total lifting of the entire valve head. In the said DE-C-30 05 329 this problem has been overcome by providing some additional piston features, which, however, imply a significant complication of the design of the actuator. Moreover, by this known proposal it is not taken into consideration that an intruding pressurized CIP-liquid will produce a lifting action rather than a closing action on the wider valve plate, inasfar as the wider valve plate is still influenced only by its associated biasing means.

According to the present invention the said problem is overcome by arranging the piston system such that pressurized air is introduceable selectively underneath the second piston, for moving the entire valve head into its open position, and into the space between the second and the first piston, respectively, whereby in the latter case the first piston will cause the wider valve plate to be lifted as desired, while the second piston will be inversely affected, i.e. so as to further urge the wider valve plate against the valve seat, in addition to the bias already acting on this piston. This additional closing pressure will appear in immediate conjunction with the application of the air pressure for lifting the narrow piston plate, whereby even the initial lifting motion of the first piston and valve plate system will not effectively transfer any resulting lifting influence on the second piston system, despite some frictional coupling between the two systems.

Preferably the second piston plate is made with a diameter larger than that of the first piston, with the associated respective cylinder portions corresponding adapted, whereby it is further ensured that for a given lifting force on the narrower piston a still higher closing force will be applied to second piston and valve plate system.

In the following the invention will be described in more detail, by way of example, with reference to the drawing, in which:
Fig. 1 is a sectional view of a basic embodiment of a valve according to the invention, shown in a fully closed condition,
Fig. 2 a similar view showing the valve head in a partially opened condition during partial CIP-cleaning, and
Fig. 3 a similar view of a modified embodiment of the valve.

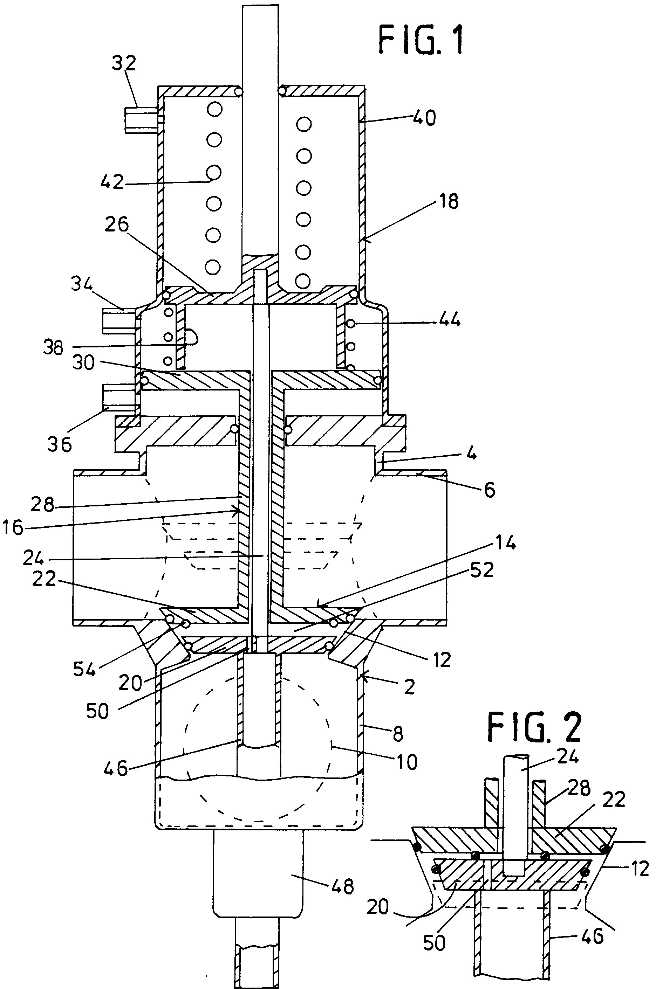

The valve shown in Fig. 1 comprises a valve cylinder 2 having an upper portion 4 connectable with a pipe system 6 and a lower portion 8 connectable with a pipe system 10. Between the portions 4 and 8 there is arranged a conical valve seat 12 cooperating with a valve head generally designated 14. This valve head, through valve rod means 16, is connected with an exterior unit 18, which comprises cylinder and piston means for controlling the movements of the valve head 14 as described in more detail below, by means of compressed air supplied to the actuator unit 18 in a selective manner.

The valve head 14 is divided in a lower, relatively narrow valve plate 20 and an upper wider valve plate 22, both normally engaging the conical valve seat 12 when pressed downwardly from the actuator unit 18 through the rod system 16. This system is divided in a central rod 24, which connects the lower and narrower piston plate 20 with an upper piston 26 in the actuator unit 18, and a surrounding tubular rod 28, which connects the upper and wider valve plate 22 with a lower piston 30 in the unit 18.

In the unit 18 there is provided exterior connector stubs 32,34 and 36 for compressed air, the stub 32 being provided at the top of the unit and the stub 36 at the bottom of the unit, while the stub 34 is provided intermediately between the two pistons 26 and 30.

The upper piston 26 is provided with a depending skirt 38 forming at its lower end an abutment for the top side of the lower piston 30. Between the top side of the piston 26 and the top of its associated cylinder housing 40 there is arranged a spring 42 serving to urge the piston 26 downwardly, thus biasing the lower valve plate 20 against its closed position in the seat 12. Via a spring 44 between the two pistons 26 and 30 also the piston 30 is urged downwardly, whereby also the upper valve plate 22 is forced against the seat 12, in a position spaced above the valve plate 22.

The closing action of the spring 42 may be supported by means of compressed air introduced through the upper stub 32, whereby an extra firm closing of the valve head 14 is achievable.

The lower valve plate 20 has a depending, centrally disposed pipe 46, which projects through the bottom of the cylinder housing 8, slidable in a stuffing box 48, and having an open lower end. The valve plate 20 itself is provided with a throughpassage 50 connecting the tube 46 with the space between the valve plates 20 and 22. Should any liquid leak past any of the valve plates 20 or 22 it will seep into the drainage space, designated 52, between the two valve plates, and from there it will be drained off through the passage 50 and down pipe 46. When the valve head is lifted into its open position, e.g. as shown in dotted lines in Fig. 1, the two valve plates 20 and 22 should be held closely together, such that an annular sealing ring 54 protruding from one of the interfacing surfaces of the valve plates will seal off the drainage space 52. The valve head is lifted by introducing compressed air through both the lower stub 36 and the intermediate stub 34, whereby the lower piston 30 will remain substantially unaffected, while the primary effect will be that the upper piston 26 is urged upwardly, thus lifting the lower valve plate 20 from its closed position. During its further lifting the valve plate 20 will engage the lower side of the upper valve plate 22 and thereby cause also this plate to be lifted, against the action of the spring 44 and against the relatively small differential air pressure on the lower piston plate 30, whereby the entire valve head 14 is lifted in a closed condition.

When it is desired to clean the valve seat 12 and the major part of the surfaces confining the drainage space 52, by means of cleaning fluid in the lower pipe system 10, compressed air is supplied to the stub 34 only, whereby a large pressure will be applied to the top side of the lower piston plate 30, which will thus cause the upper valve plate 22 to be pressed firmly against the seat 12. The same air pressure will act on the lower side of the piston 26, whereby this piston and therewith the lower valve plate 20 will be raised but only until the valve plate 20 hits the seated valve plate 22. As the piston 26 is narrower than the piston 30 there will be no risk of the valve 22 being raised by the upward pressure from the valve plate 20; the latter is automatically bound to be seated with a force that is larger than the lifting on the valve plate 22, no matter the intensity of the air pressure.

As shown in Fig. 2 the lower valve plate 20 is now lifted so as to enable cleaning liquid from the lower pipe system to flush the valve seat underneath the upper valve plate 22. If it is desired to flush even the drainage room 52 inside the sealing ring 54 and also the drainage passage 50 this can be achieved by controlling the compressed air to be additionally intermittently supplied to the upper stub 32, as this, through the piston 26, will cause the lower valve plate 20 to move down and up a number of times between its two extreme positions, and during these movements the liquid will be free to flow from the pipe system 10 to the drain passage 50.

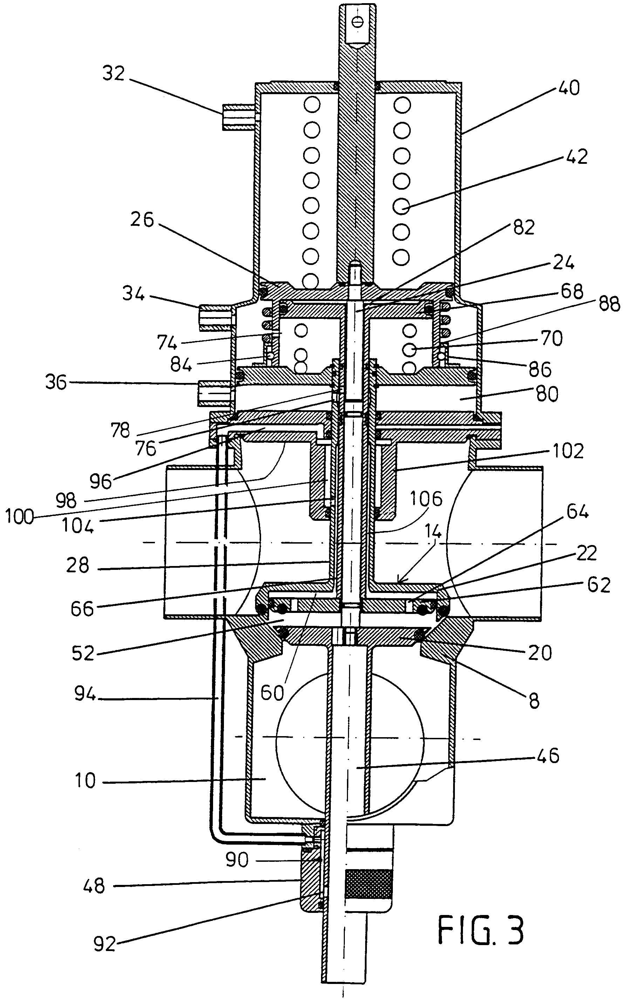

The valve shown in Fig. 3 is widely similar to the valve according to Fig. 1, but it comprises an additional piston and valve plate system as well as a more developed cleaning system. For similar parts, the same reference numerals as in Fig. 1 are used.

The upper piston plate 22 is shaped with a downwardly open cylinder portion 60, in which there is displaceably mounted an auxiliary piston plate 62 having a number of through holes 64 and carrying the sealing ring 54 at its underside. The plate 62 is connected with a tubular valve rod 66 positioned between the central valve rod 24 and the outer tubular valve rod 28 of the piston plate 22. The valve rod 66 projects upwardly to the space inside the skirt 38 of the piston plate 30, where it is connected with a piston plate 68 cooperating with the inner, cylindrical side of the skirt 38. A spring 70 is mounted between the two piston plates 68 and 30.

In the skirt 38 a hole 74 is provided at a level underneath the piston plate 68. Below the piston plate 30 the tubular rod 28 of this plate is provided with a hole 76 communicating with a hole 78 in the inner tubular rod 66 through intermediate recess means. Upwardly from the hole 78 there are no sealing means provided between the central rod 24 and the inside of the tube 66, whereby, as far as air pressure is concerned, there will be a free connection between the space underneath the piston 30, this space here being designated 80, and a top space 82 between the piston plate 68 and the underside of the upper piston plate 26.

The modification so far described is widely corresponding to the design of the valve according to the Swedish patent specification No. 7909590-7, one objective of which is to ensure that normally, when the valve is closed, the drainage room 52 between the valve plates 20 and 22 is fully open, while it is fully closed when the valve head is retracted into its open position. In the closed position, optionally with compressed air acting on the top side of the piston 26 through the upper stub 32, the intermediate piston plate 62 will be lifted to a neutral position in the upper valve plate 22 by the action of the spring 70, leaving the draining room open. When the valve head is lifted by air pressure applied to the stub 36 this pressure will be transferred to the space 82 above the top of the intermediate piston plate 68, causing this to be forced downwardly from the upper piston 26, whereby the intermediate valve plate 62 is urged sealingly against the lower valve plate 20 while still maintaining its sealing engagement with the upper valve plate 22. Thus, the raised valve head will be effectively closed towards the surroundings.

Near tis lower end the skirt 38 is provided with an external locking ring 84 forming a projection located inside a bushing 86 secured to and upstanding from the piston plate 30. This bushing has a top edge flange 88 projecting inwardly towards the outside of the skirt 38, whereby the skirt will be raisable only slightly from the piston plate 30, as the ring 84 will then abut the flange 88. This limited distance of raising is adjusted so as to be less than the spacing between the valve plates 20 and 62. Therefore, when according to the invention it is desired to effect a separate lifting of the lower valve plate 20 by introducing compressed air through the stub 34, this air pressure will still result in a firm pressing down of the piston plate 30 and its associated valve plate 22, but at the same time in a limited raising of the lower valve plate 20, whereby this plate is lifted off from its sealing engagement with the valve seat 12, but without engaging the bottom side of the upper valve plate 22,62. Thus, the drainage chamber 52 will now be permanently open as the air pressure is maintained on the stub 34. In Fig. 3 it is additionally shown that the lower stuffing box 48 has an internal widening providing for a cylindrical recess 90 about the piston tube 46, this recess communicating with a hole 92 in the wall of this tube, and, through an external pipe 94, with a radial passage 96 in the top plate 98 of the upper valve housing, this passage being connected to a cylindrical space 100 in a stuffing box 102 projecting downwardly from the said top plate 98, around the upper piston rod system 24,28,66. Through a hole 104 in the outer tubular valve rod 28 the space 100 is connected with an inner cylindrical space 106 between the tubular valve rods 28 and 66, this space being in open connection with the room 60 between the piston plates 14 and 62.

In the prior art, an almost identical design is known from the Swedish patent No. 7909590-7, in which, however, the external pipe 94 is provided with a branch stub for introduction of CIP cleaning liquid. This liquid may thus be introduced externally, so as to be supplied to both the lower stuffing box 48 and the upper stuffing box 102, whereby the respective tubular valve rods 46 and 28,66 may be cleaned effectively at the areas thereof having been exposed to the process liquids prior to the rods being retracted into their respective boxes. Thereafter the valve rods may be reintroduced into positions projecting into the respective valve housings, without being contaminated by prior deposits thereon.

The cleaning fluid introduced from outside into the pipe 94 will be distributed to the lower stuffing box 48, from which it is drained off through the 92, and to the upper stuffing box 102, through which it is drained off through the space 100, the holes 104, the space 106, the space 60, the piston plate holes 64 and finally the space 52, the hole 50 and the downlet pipe 46.

In connection with the invention, however, it has been recognized that a similar total cleaning of the drainage room 52 and the said cylindrical passages may be obtained without any external supply of cleaning liquid, and for that reason the connector pipe 94 in Fig. 3 is not provided with a branch stub, and in a system or battery of the valves a separate external tubing for CIP-liquid may be entirely avoided. When the CIP-liquid is admitted to the drainage room by the discussed individual lifting of the lower valve plate 20 the liquid may be under a pressure sufficient to cause it to continue upwardly through the holes 64, up through the cylindrical space 106 and the stuffing box 102, outwardly through the channel 96 and down through the pipe 94 and through the lower stuffing box 48 and the outlet hole 92.

It has been found that at least in the majority of the installations it will be fully sufficient to effect the described internal cleaning of the valves in connection with the operative cleaning of associated product pipes. Thus, the cleaning will be effected automatically, without any separate control system or supply piping.

It is to be mentioned that the discussed CIP cleaning could apply even to the embodiment according to Fig. 1, when modified with an upper or both an upper and lower stuffing box. Also, instead of being conical, the valve seat passage may be cylindrical, with the upper valve plate closing against the top edge area around the passage and the lower valve plate closing the passage pistonwise.

## Claims

1. A valve of the double-seat type, comprising two valve chambers for connection with respective pipe systems, a valve seat passage arranged between these chambers, this passage being conical or otherwise narrowing so as to accommodate a valve head comprising a first valve plate closing against a narrower portion of the seat passage and a second valve plate closing against a wider portion thereof, these valve plates in their closed positions forming between them a drainage chamber, which is connected with an outlet channel to the surrounding, said valve head being connected with an external valve actuator unit through a valve rod system comprising separate valve rods for the two valve plates, the actuator means being operable to effect an opening of the valve by retraction of both of these valve rods in such a manner that the two valve plates are held together for closing the drainage chamber between them and then as a whole retracted from the seat passage, the actuator unit further being operable to effect a separate retraction of said first valve plate for opening the adjacent valve chamber towards the drainage chamber for enabling a CIP-cleaning of this chamber, characterized in that the actuator unit is designed so as to automatically exert an increased closing pressure on said second valve plate in response to actuation for separate retraction of said first valve plate from said narrower valve said portion.

2. A valve according to claim 1, in which the actuator unit is a pneumatically operated unit having separate piston plates for selectively effecting the lifting of the two valve plates from their respective seat engaging positions, characterized in that the piston plate connected with said first valve plate member is narrower than the piston plate connected with the second, wider piston plate member, such that the introduction of compressed air between the two piston plates with automatically result in a lifting of the first valve plate from its valve seat and in an associated strengthening of the closing pressure of the second valve plate against its associated wider valve seat portion.

3. A valve according to claim 1, in which the valve head comprises an additional, intermediate valve plate member which is shiftable between a first, retracted position, in which it keeps open the space between the two exterior valve plates, and an operative position, in which it closes then circumference of this space, characterized in that the actuator means for separately lifting the said first valve plate include stop means for limiting this movement to a position of the valve plate in which it is spaced from both the second valve plate and the intermediate valve plate, when the latter assumes its retracted position.

4. A valve according to claim 3, in which the stop means are arranged as abutment means limiting the mutual displaceability of the valve rods of the respective valve plates.

5. A valve of the double-seat type, in which two valve members are operable to close against a common valve seat area with mutual spacing for forming between them a drainage chamber in open connection with a drainage outlet, the valve members having individual guiding rods, of which at least one projects through a stuffing box, in which there is provided a cylindrical space surrounding the rod for enabling CIP-cleaning thereof, characterized in that an inlet for CIP fluid to the stuffing box is arranged as a channel from the drainage chamber through the respective valve rod.

6. A valve according to claim 5, in which the valve rods project through respective opposed stuffing boxes, said inlet being connected to one of these boxes, which is series connected with the other box through an external conduit, said other box being outlet connected to said drainage outlet.

7. A valve according to claim 5, in which the valve members are individually liftable for feeding CIP fluid to the stuffing box from any one of the associated valve chambers.

8. A valve according to claim 5, in which an intermediate valve member is operable to close the drainage chamber when the valve head is lifted from the seat as a whole.

9. A system or battery of valves according to claim 5, in which the CIP cleaning of the drainage chambers and stuffing boxes is effected without external supply means for CIP liquid, solely by a selective actuation of the respective valve members.
